# DEMANDE DE BREVET EUROPEEN

(11) **EP 2 463 155 A2**
(43) Date de publication de la demande: **13.06.2012**
(21) Numéro de dépôt: 11192629.1
(22) Date de dépôt: 08.12.2011
(51) Int. Cl.: B60Q 3/04, F21S 8/00, G02F 1/13357

(54) **Dispositif de rétroéclairage amélioré**

(30) Priorité: 10.12.2010 FR 1060393
(71) Demandeur: MAGNETI MARELLI FRANCE, 78190 Trappes (FR)
(72) Inventeur: Yu, Rui, Huadu Guangzhou 510800 (CN)
(74) Mandataire: Texier, Christian

(57) **Abrégé**

L'invention concerne un tableau de bord comprenant un dispositif de rétroéclairage d'une surface à rétroéclairer (18), caractérisé en ce qu'il comprend :
- au moins une source d'éclairage délivrant un rayonnement (10),
- une première surface de réflexion (12) agencée en regard d'un cône de rayonnement de la source d'éclairage,

une deuxième surface de réflexion (14) agencée en regard d'une part de la première surface de réflexion (12), et d'autre part, en regard de la surface à rétroéclairer de façon à renvoyer le rayonnement renvoyé par la première surface de réflexion sur au moins une partie de la surface à éclairer (18).

## Description

L'invention concerne le domaine des tableaux de bord pour véhicule automobile.

Plus précisément, l'invention concerne les tableaux de bord comprenant des dispositifs d'éclairage par l'arrière (ou rétroéclairage) d'une surface d'affichage comme un écran, notamment un écran à cristaux liquides (LCD).

Plus particulièrement encore, l'invention concerne le rétroéclairage à l'aide d'une source lumineuse afin d'améliorer le contraste d'affichage et d'assurer ainsi une bonne lisibilité même dans un lieu obscur ou mal éclairé.

Le rétroéclairage est notamment utilisé dans les tableaux de bord de véhicules. Les tableaux de bord affichent généralement des inscriptions comme par exemple les différents niveaux de vitesse, les niveaux de fluides au sein du véhicule (huile, essence, ...) ou toute autre indication à destination du conducteur. Le rétroéclairage permet d'avoir une bonne visibilité des inscriptions du tableau de bord la nuit ou plus généralement en cas de mauvaise luminosité ambiante.

Afin d'assurer un tel rétroéclairage, il est prévu selon l'état de la technique, l'utilisation d'une source d'éclairage telle qu'une lampe ou une diode électroluminescente (appelée aussi DEL ou LED pour « Light-emitting diode » en terme anglo-saxon).

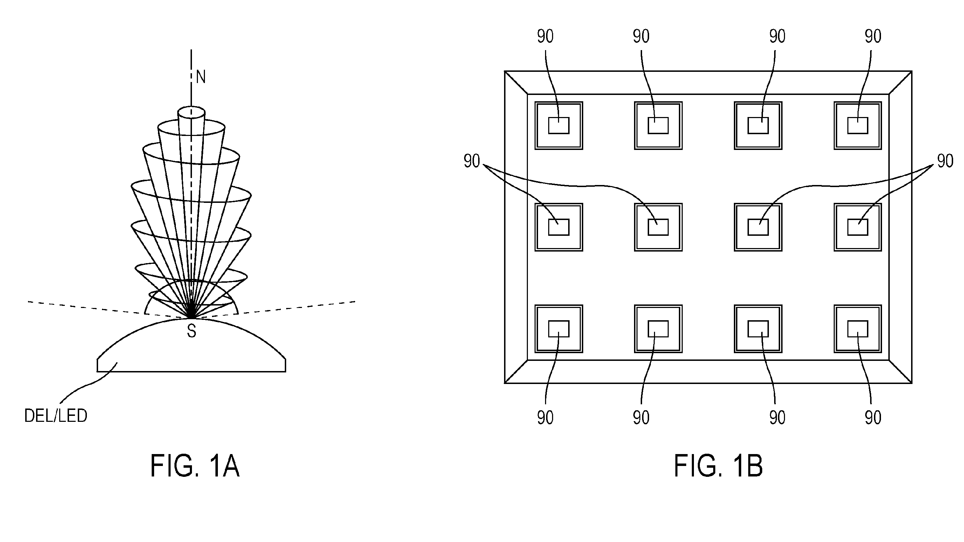

Cependant, l'utilisation de diode (DEL) ne permet pas d'obtenir un résultat complètement satisfaisant quant à l'homogénéité du rétroéclairage offert. En effet, comme illustré à la figure 1a, il est à noter que l'intensité lumineuse du rayonnement émis par une diode perd rapidement de son intensité en fonction de l'écartement par rapport à la normale N de son rayonnement. On entend par « normale » du rayonnement lumineux, la droite passant par la source lumineuse S et suivant son maximum d'intensité lumineuse. On entendra par « cône de rayonnement », la portion d'espace à intérieur de l'enveloppe générée par la révolution autour de la normale N du rayonnement, d'une droite passant par la source et présentant avec la normale un angle non nul.

L'intensité lumineuse du rayonnement diminue en fonction de l'éloignement par rapport à la normale. Par exemple, l'intensité lumineuse du rayonnement devient quasiment nulle en dehors du cône de rayonnement d'angle de 80°.

Afin de garantir l'éclairage de l'ensemble d'une surface à rétroéclairer, un dispositif de rétroéclairage selon l'état de la technique est composé, en référence à la figure 1b, d'une pluralité de diodes 90 réparties régulièrement sur l'ensemble du dispositif de rétroéclairage. Un tel dispositif permet le rétroéclairage de l'ensemble de la surface mais présente l'inconvénient d'avoir un rétroéclairage hétérogène de la surface, les parties de la surface se situant à la normale de chaque diode étant éclairées avec un rayonnement plus intense que le reste de la surface.

Alternativement, l'état de la technique propose l'utilisation d'une surface réfléchissante permettant de renvoyer une partie du rayonnement sur certaines parties de la surface à rétroéclairer.

Cependant, des critiques ont été émises car cette solution ne permet pas d'éclairer l'ensemble de la surface tout en garantissant l'homogénéité du rétroéclairage. En effet, bien que l'utilisation d'une surface réfléchissante permet de refléter le rayonnement en direction de certaines zones de la surface à rétroéclairer qui ne seraient pas atteintes sans ce moyen par le rayonnement lumineux, il existe une différence d'intensité lumineuse entre les parties de la surface qui sont directement atteintes par le rayonnement et les parties qui sont atteintes via une réflexion du rayonnement.

De plus, des remarques ont été soulevées quant à certaines contraintes que devait remplir un rétroéclairage notamment dans le fait de pouvoir obtenir en plus du rétroéclairage global et homogène de la surface à rétroéclairer, un éclairage spécifique de certaines zones prédéterminées.

Afin de répondre aux inconvénients mentionnés, l'invention propose un tableau de bord comprenant un dispositif de rétroéclairage d'une surface à rétroéclairer, caractérisé en ce qu'il comprend :
- au moins une source d'éclairage délivrant un rayonnement,
- une première surface de réflexion agencée en regard d'un cône de rayonnement de la source d'éclairage,
- une deuxième surface de réflexion agencée en regard d'une part de la première surface de réflexion, et d'autre part, en regard de la surface à rétroéclairer de façon à renvoyer le rayonnement renvoyé par la première surface de réflexion sur au moins une zone de la surface à éclairer.

L'utilisation de deux surfaces réfléchissantes en regard l'une de l'autre, l'une des deux surfaces étant en regard également de la surface à rétroéclairer, permet d'avoir une diffusion homogène du rayonnement sur tout ou partie de la surface.

Avantageusement mais facultativement, l'invention comprend au moins l'une des caractéristiques suivantes :
- le dispositif comprend en outre une troisième surface de réflexion agencée de manière à renvoyer sélectivement une partie du rayonnement renvoyé par la première surface de réflexion en direction d'une ou plusieurs partie(s) de la surface à rétroéclairer,
- la source d'éclairage comprend une pluralité de lampes,
- les lampes sont des diodes électroluminescentes,
- la première surface comprend une pluralité de surfaces de réflexion, chacune étant associée à une de la pluralité de lampes, et agencée en regard d'un cône de rayonnement de la lampe,
- la pluralité de premières surfaces de réflexion est agencée de manière à renvoyer le rayonnement de la source lumineuse en direction d'un même point situé sur la deuxième surface de réflexion,
- la première surface de réflexion est parabolique,
- la première surface de réflexion est elliptique ou hyperbolique,
- la deuxième surface de réflexion est parabolique,
- la deuxième surface de réflexion est elliptique ou hyperbolique,
- le dispositif comprend un film à luminosité améliorée,
- la surface à rétroéclairer comprend un écran LCD.

D'autres buts, caractéristiques et avantages de la présente invention apparaitront à la lecture de la description détaillée qui va suivre, au regard des dessins annexés, donnés à titre d'exemples non limitatifs et sur lesquels :
- la figure 1a représente de manière schématique une DEL et les cônes de rayonnement formés pour illustrer l'état de la technique,
- la figure 1b représente un dispositif de rétroéclairage selon l'état de la technique,
- la figure 2 représente schématiquement un tableau de bord selon une réalisation possible de la présente invention,
- la figure 3 est la vue d'une coupe de la figure 2 selon le plan de coupe référencé A-A sur la figure 2,
- la figure 4 est une vue schématique de haut d'un dispositif de rétroéclairage selon une réalisation possible de la présente invention,
- les figures 5a à 5c représentent schématiquement trois formes possibles pour la première surface de réflexion conforme à la présente invention,
- la figure 6 est une vue schématique d'un dispositif de rétroéclairage selon une réalisation possible de la présente invention,
- la figure 7 est une vue éclatée d'un dispositif de rétroéclairage selon une réalisation possible de la présente invention,
- la figure 8 est une vue éclatée d'un dispositif de rétroéclairage selon une autre réalisation possible de la présente invention,
- les figures 9a à 9c représentent schématiquement trois formes possibles pour la deuxième surface de réflexion,
- la figure 10 est une vue schématique d'un dispositif de rétroéclairage selon une réalisation possible de la présente invention,
- la figure 11 est vue schématique de la troisième surface de réflexion,
- la figure 12 représente de manière schématique un dispositif de rétroéclairage selon une réalisation particulière de la présente invention,
- la figure 13 représente de manière schématique un dispositif de rétroéclairage selon une autre réalisation particulière de la présente invention,
- les figures 14a et 14b représentent schématiquement deux réalisations possibles de la première surface de réflexion selon l'invention.

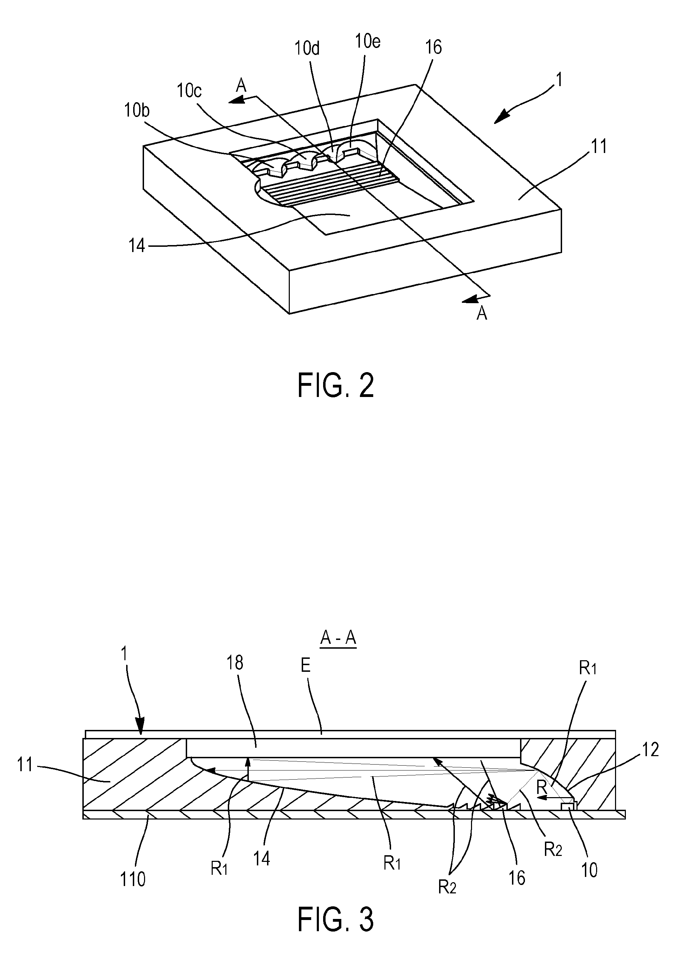

On a schématisé sur la figure 3 un tableaux de bord comprenant un écran d'affichage E, tel qu'un écran à cristaux liquides (LCD), associé à un dispositif de rétroéclairage 1. Le tableau de bord, et notamment l'écran d'affichage E, peuvent faire l'objet de nombreuses variantes de réalisation. On citera en particulier et sans limitation la possibilité de remplacer l'écran à cristaux liquides (LCD) par un écran sérigraphié associé à des indicateurs mobiles à aiguille, de placer l'ensemble des composants dans un boîtier et de disposer une vitre transparente à l'avant du dispositif, etc... La structure générale d'un tel tableau de bord étant connue, elle ne sera pas décrite plus en détail par la suite et l'on s'attachera au contraire à décrire par la suite la structure du dispositif de rétroéclairage 1.

En référence aux figures 2 et 3 et selon une réalisation possible de la présente invention, un dispositif de rétroéclairage 1 comprend un boîtier 11 avec un logement apte à recevoir des éléments du dispositif de rétroéclairage décrit ci-après. Un tel boîtier peut être réalisé dans toute matière adéquate pour l'utilisation dudit dispositif de rétroéclairage et ne sera pas plus détaillé par la suite.

En référence à la figure 3 qui est une vue de la coupe AA de la figure 2, un dispositif de rétroéclairage 1 comprend au sein du boîtier 11 au moins une source d'éclairage 10 délivrant un rayonnement R, une première surface de réflexion 12 aménagée en regard d'un cône de rayonnement de la source d'éclairage 10, et une deuxième surface de réflexion 14 agencée en regard d'une part de la première surface de réflexion 12 et d'autre part en regard de l'ensemble de la surface à rétroéclairer 18 (constituée par exemple par la face arrière de la l'écran E) de façon à réfléchir le rayonnement renvoyé par la première surface de réflexion 12 sur tout ou partie de la surface à rétroéclairer 18.

La première surface de réflexion 12 est donc en regard d'un cône de rayonnement de la source lumineuse 10 centré sur la normale du rayonnement. Avantageusement la première surface de réflexion 12 est en regard d'un cône de rayonnement d'au moins 40° et préférentiellement mais non limitativement d'un cône de rayonnement d'au moins 60°.

Ainsi un rayon R₁ émanant de la source d'éclairage 10 en direction de la première surface de réflexion 12 est renvoyé par cette dernière en direction de la deuxième surface de réflexion 14 ; cette dernière renvoyant le rayon sur une partie de la surface à rétroéclairer 18.

L'agencement et la géométrie des deux surfaces de réflexion 12 et 14 par rapport à la source d'éclairage 10 sont tels qu'ils permettent un rétroéclairage homogène sur l'ensemble de la surface à rétroéclairer 18.

En référence à la figure 2, le dispositif de rétroéclairage comprend également la cas échéant une troisième surface de réflexion 16 agencée sur une partie de la deuxième surface de réflexion 14 et de manière à renvoyer sélectivement une partie du rayonnement renvoyé par la première surface de réflexion 12 en direction d'une ou plusieurs parties de la surface à rétroéclairer 18.

Ainsi, l'agencement et la géométrie de cette troisième surface de réflexion 16 permettent de renvoyer une partie du rayonnement réfléchi par la première surface 12 (à titre d'exemple est illustré un rayon R₂) sur des parties spécifiques de la surface à rétroéclairer 18, ces zones devant être spécialement mieux éclairées que le reste de la surface qui, elle, doit être éclairée de manière homogène.

En référence à la figure 3 et selon une réalisation possible de la présente invention, la source d'éclairage comprend une pluralité de diodes électroluminescentes (DEL 10a, 10b, 10c, 10d et 10e). Ces diodes sont préférentiellement fixées (par exemple par soudage) sur un circuit imprimé 110 du boîtier 11 (comme représenté à la figure2). Ce circuit imprimé 110 comprend d'une part les logements nécessaires à l'installation des diodes et d'autre part l'ensemble de la circuiterie nécessaire à la commande et l'alimentation des diodes électroluminescentes. Une telle circuiterie imprimée est connue de l'état de la technique et ne sera pas plus détaillée.

De retour à la figure 3, chacune des diodes de la source d'éclairage 10a à 10e est associée à une première surface de réflexion secondaire respectivement 12a à 12e, chacune de ces premières surfaces de réflexion étant agencée en regard d'un cône de rayonnement de la diode à laquelle elle est respectivement associée de sorte à réfléchir le rayonnement en direction d'une deuxième surface de réflexion 14 commune du dispositif de rétroéclairage.

Plus précisément et selon une réalisation particulière de la présente invention, il est prévu que l'ensemble des surfaces de réflexion 10a à 10e renvoie le rayonnement lumineux en direction d'un même point A.

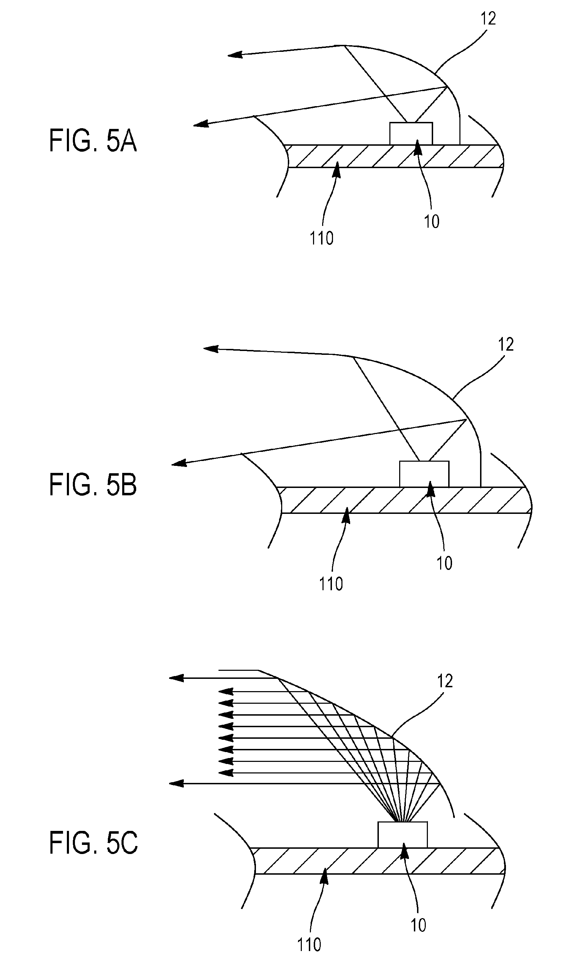

En référence aux figures 5a à 5c présentant chacune un mode de réalisation particulier de la présente invention, chaque première surface de réflexion 12 peut être de forme :
- elliptique comme représenté à la figure 5a, c'est-à-dire que la première surface de réflexion 12 présente une courbure ellipsoïdale de telle manière que la source lumineuse 10 est comprise dans l'ensemble convexe défini par la courbure de la première surface de réflexion 12,
- hyperbolique comme représenté à la figure 5b, c'est-à-dire que la première surface de réflexion 12 présente une courbure hyperbolique de telle manière que la source lumineuse 10 est comprise dans l'ensemble convexe défini par la courbure de la première surface de réflexion 12,
- ou plus préférentiellement, parabolique, comme représenté à la figure 5c, c'est-à-dire que la première surface de réflexion 12 présente une courbure parabolique de telle manière que la source lumineuse 10 est comprise dans l'ensemble convexe défini par la courbure de la première surface de réflexion 12.

En effet, une surface de réflexion parabolique permet avantageusement de renvoyer l'ensemble des rayons du cône de rayonnement en regard duquel la surface est agencée dans la même direction. Ainsi, le faisceau renvoyé par la première surface de réflexion 12 est un faisceau parallèle, image du cône de rayonnement par la réflexion de la première surface de réflexion 12.

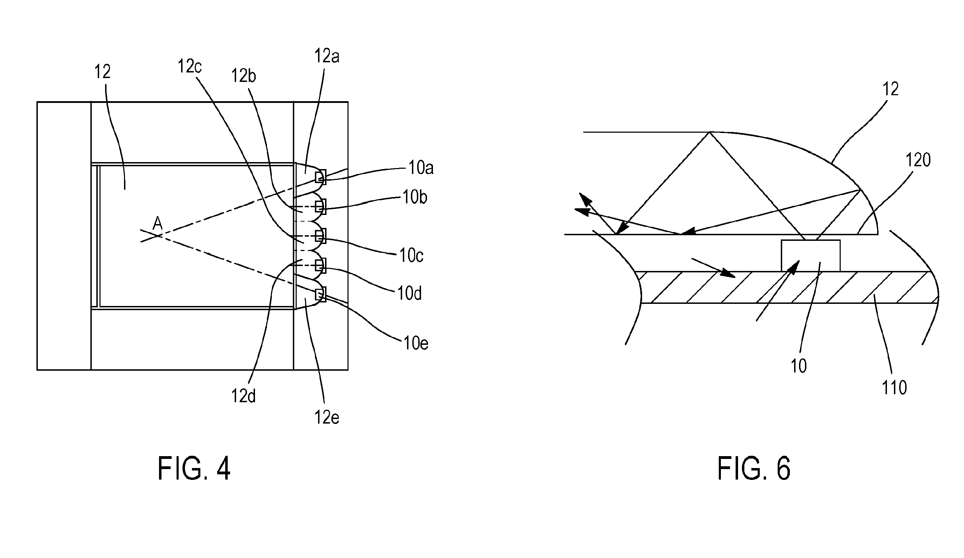

En référence à la figure 6 et selon un mode de réalisation particulier de la présente invention, la première surface de réflexion 12 comprend en outre un élément de miroir semi-réfléchissant 120 agencé entre la source lumineuse 10 et la première surface de réflexion 12. Un tel miroir semi-réfléchissant permet de renvoyer en direction de la surface 18 à rétroéclairer certains rayons de la source d'éclairage 10 renvoyés par la surface de réflexion 12 de manière non parallèle, notamment dans le cas de l'utilisation d'une première surface de réflexion elliptique ou hyperbolique. Ainsi, l'élément de miroir rétro-réfléchissant 120 permet de laisser passer les rayons depuis la diode jusqu'à la première surface de réflexion 12 mais réfléchit les rayons émanant de la première surface de réflexion 12 dans l'autre direction. Dans un mode de réalisation particulier, le miroir rétro-réfléchissant 120 est plan et parallèle à la surface 18 à rétroéclairer. D'autres variantes sont également possible comme une géométrie convexe ou concave pour le miroir rétro-réfléchissant 120 selon la distribution du flux renvoyé par la première surface 12

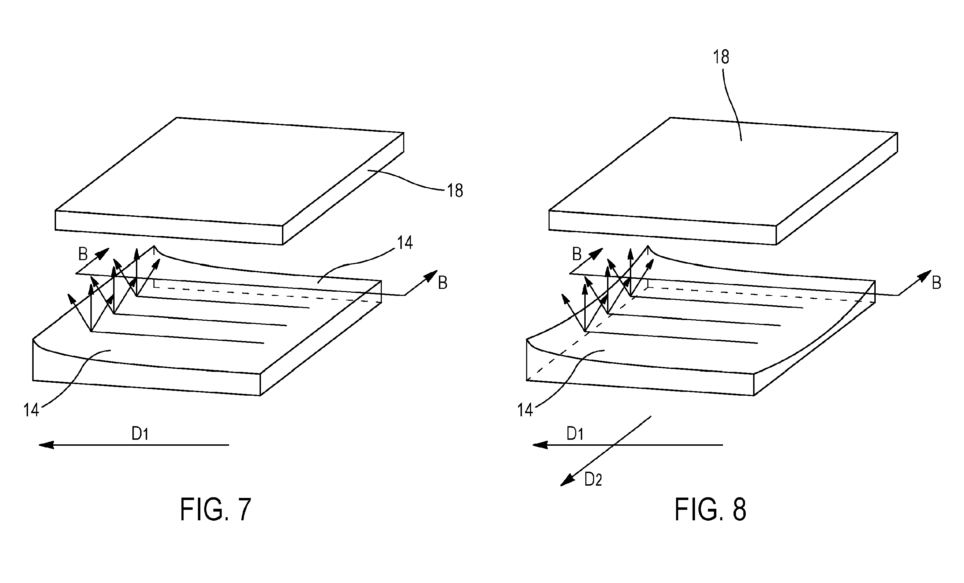

En référence à la figure 7 et selon une réalisation possible de la présente invention, un dispositif de rétroéclairage comprend une deuxième surface de réflexion 14 agencée en regard d'une part de la première surface de réflexion 12 et d'autre part en regard de la surface à rétroéclairer 18 de façon à renvoyer le rayonnement réfléchi par la première surface de réflexion sur la totalité de la surface à rétroéclairer.

De manière préférentielle, la deuxième surface de réflexion 14 est de type parabolique. En effet, une telle surface parabolique permet avantageusement de diffuser de manière homogène les rayons émanant de la première surface de réflexion 12.

La deuxième surface de réflexion 14 présente une concavité selon une première direction D1 parallèle à la surface à rétroéclairer 18, telle que la surface à rétroéclairer soit comprise dans l'ensemble convexe définie par la courbure de la deuxième surface de réflexion 14.

En référence à la figure 8 et selon un mode de réalisation particulier de la présente invention, la deuxième surface de réflexion 14 présente à la fois une géométrie hyperbolique de manière à présenter une concavité (vers la surface à éclairer) le long d'une première direction D1 mais de plus, présente une courbure parabolique tridimensionnelle de façon à présenter également une concavité (vers la surface à éclairer) le long d'une direction D2 parallèle à la surface à rétroéclairer 18 et perpendiculaire à la direction D1. Un tel agencement permet une meilleure homogénéisation du rétroéclairage.

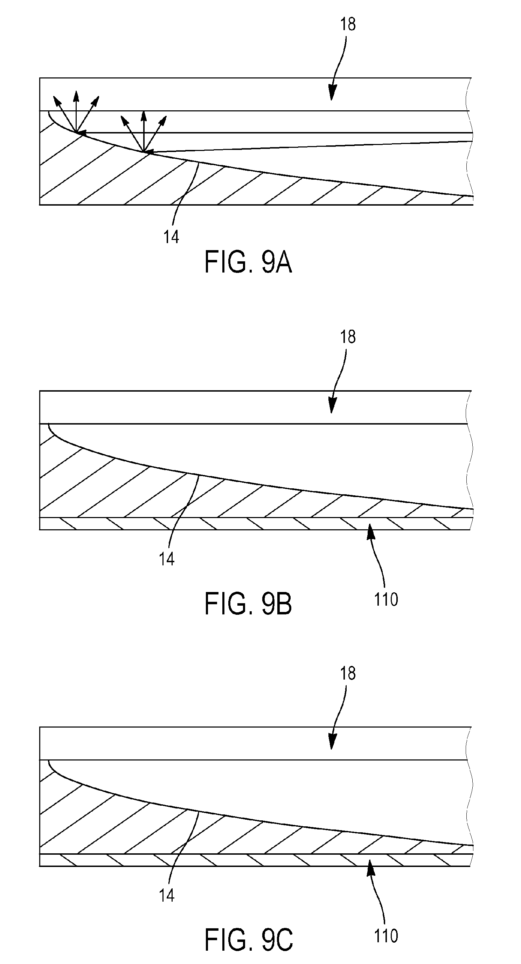

En référence aux figures 9a à 9c présentant chacune un mode de réalisation particulier de la présente invention, la géométrie de la deuxième surface de réflexion 14 peut être:
- elliptique, c'est-à-dire que la deuxième surface de réflexion 14 présente une courbure ellipsoïdale de telle manière que la surface à éclairer 18 est comprise dans l'ensemble convexe définie par la courbure de la deuxième surface de réflexion 14,
- Hyperbolique, c'est-à-dire que la deuxième surface de réflexion 14 présente une courbure hyperbolique de telle manière que la surface à éclairer 18 est comprise dans l'ensemble convexe définie par la courbure de la deuxième surface de réflexion 14,
- Ou parabolique, c'est-à-dire que la deuxième surface de réflexion 14 présente une courbure parabolique de telle manière que la surface à éclairer 18 est comprise dans l'ensemble convexe définie par la courbure de la deuxième surface de réflexion 14.

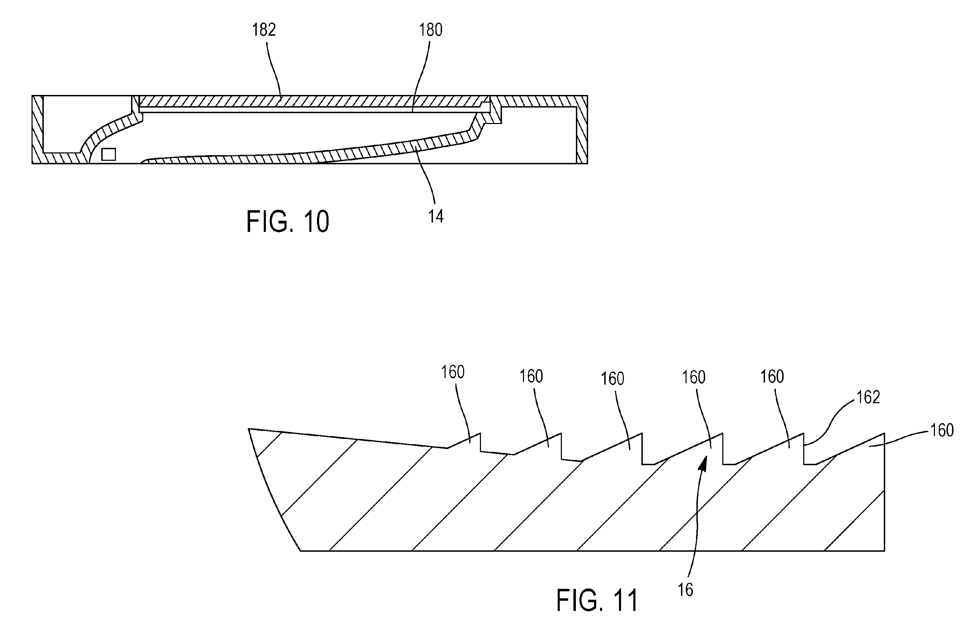

En référence à la figure 10 et selon un mode particulier de la présente invention, le dispositif de rétroéclairage comprend au niveau de la surface à rétroéclairer 18 un film diffuseur (c'est-à-dire permettant une bonne diffusion de la lumière émanant de la seconde surface de réflexion 14) afin d'augmenter l'homogénéisation du rétroéclairage. De plus, ce film diffuseur 180 est un film à luminosité améliorée (appelé aussi film BEF) ou un film de double amélioration de la luminosité (appelé aussi film DBEF) permettant d'améliorer la luminosité du rayonnement provenant de la seconde surface de réflexion 14. Sur le coté opposé à la deuxième surface de réflexion 14 du film 180, est situé la surface à rétroéclairer 182 qui est par exemple un écran à cristaux liquides (LCD pour « Liquid Cristal Display » en terme anglo-saxon) ou tout autre dispositif d'affichage connu de l'état de la technique et permettant un rétroéclairage.

En référence à la figure 11 et selon un mode de réalisation particulier de la présente invention, la troisième surface de réflexion 16 du dispositif de rétroéclairage comprend une pluralité de stries 160 comprenant des surfaces réfléchissantes 162 et agencées en regard de la première surface de réflexion 12 ayant une géométrie de prisme de telle sorte à ce qu'une partie du rayonnement réfléchi par la première surface de rayonnement 12 soit renvoyée sur une ou plusieurs parties spécifiques de la surface à rétroéclairer 18, ces parties devant être éclairées de manière plus intense. Cette troisième surface est préférentiellement située entre la source lumineuse et la seconde surface de réflexion.

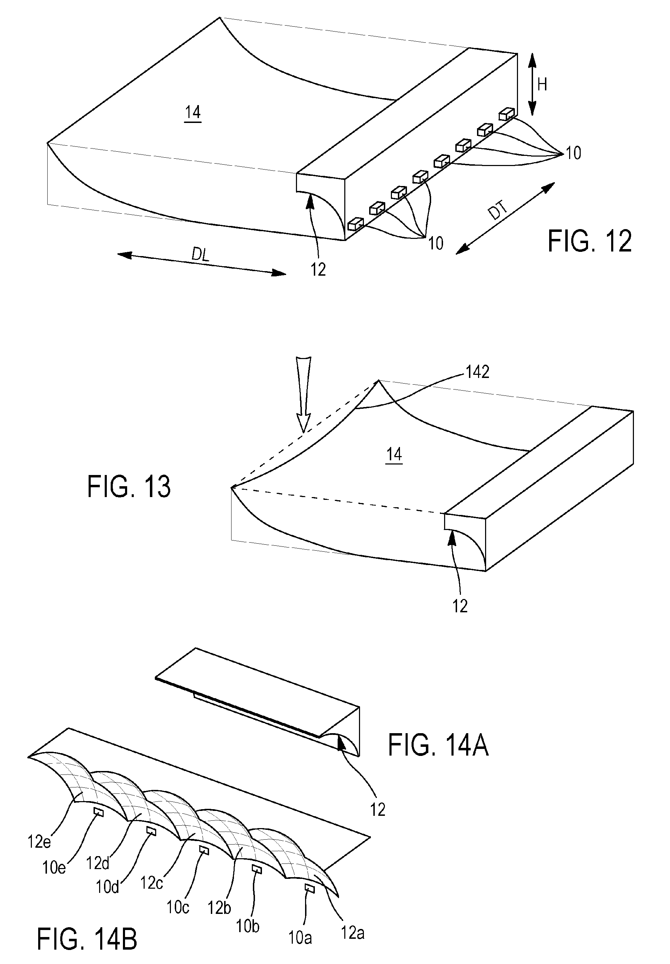

En référence à la figure 12 et selon une réalisation particulière de la présente invention, un boitier 11 comprend une géométrie parallélépipédique rectangle caractérisée par une longueur D_{L}, une longueur transversale D_{T} et une hauteur H. La pluralité de source 10 sont alignées le long d'une arrête transversale du boitier 11.

En référence aux figures 12 et 14a, la première surface 12 est générée à partir d'un premier segment de longueur D_{T} suivant une trajectoire de type parabolique, hyperbolique ou ellipsoïdale comme décrit précédemment, le segment restant parallèle à une arrête transversale du boitier 11. La deuxième surface de réflexion 14, quant à elle est générée à partir d'un second segment parallèle au premier segment et suivant une courbure concave vers le haut du boitier (c'est-à-dire vers la surface à éclairer 18, et plus précisément de type parabolique, hyperbolique ou ellipsoïdale comme décrit précédemment.

Selon une variante possible et en référence à la figure 13, La deuxième surface de réflexion 14 est générée à partir d'une courbure 142 concave vers la surface à éclairer 18, suivant une courbure concave vers le haut du boitier (c'est-à-dire vers la surface à éclairer 18, et plus précisément de type parabolique, hyperbolique ou ellipsoïdale comme décrit précédemment. La troisième surface, quant à elle, présente une pluralité stries parallèles à une arrête transversale du boitier 11.

En référence à la figure 14b, en selon un mode de réalisation particulier de la présente invention, la première surface de réflexion 12 comprend une pluralité de surfaces secondaires de réflexion 12a à 12e associées respectivement aux sources 10a à 10e. Chacune des ces surface secondaire de réflexion 12a à 12e sont générées à partir de courbures concave vers la source associée, cette courbure (parabolique, ellipsoïdale ou hyperbolique) suivant une révolution autour de la normale de la source lumineuse.

## Revendications

1. Tableau de bord comprenant un dispositif de rétroéclairage d'une surface à rétroéclairer (18), **caractérisé en ce qu'**il comprend :
- au moins une source d'éclairage délivrant un rayonnement (10),
- une première surface de réflexion (12) agencée en regard d'un cône de rayonnement de la source d'éclairage,
- une deuxième surface de réflexion (14) agencée en regard d'une part de la première surface de réflexion (12), et d'autre part, en regard de la surface à rétroéclairer de façon à renvoyer le rayonnement renvoyé par la première surface de réflexion sur au moins une partie de la surface à éclairer (18).

2. Tableau selon la revendication 1, **caractérisé en ce qu'**il comprend en outre une troisième surface (16) de réflexion agencée de manière à renvoyer sélectivement une partie du rayonnement renvoyé par la première surface de réflexion (12) directement en direction d'une ou plusieurs partie(s) de la surface à rétroéclairer (18).

3. Tableau selon la revendication 1 ou 2, **caractérisé en ce que** la source d'éclairage comprend une pluralité de lampes (10a, 10b, 10c, 10d, 10e).

4. Tableau selon la revendication 3, **caractérisé en ce que** les lampes sont des diodes électroluminescentes.

5. Tableau selon la revendication 3 ou 4, **caractérisé en ce que** la première surface comprend une pluralité de surfaces secondaires de réflexion (12a, 12b, 12c, 12d, 12e),chacune associée à une de la pluralité de lampes (10a, 10b, 10c, 10d, 10e) et agencée en regard d'un cône de rayonnement de la lampe.

6. Tableau selon la revendication 5, **caractérisé en ce que** la pluralité de premières surfaces secondaires de réflexion (12a, 12b, 12c, 12d, 12e) est agencée de manière à renvoyer le rayonnement de la source lumineuse en direction d'un même point (A) situé sur la seconde surface de réflexion (14).

7. Tableau selon l'une des revendications 1 à 6, **caractérisé en ce que** chaque première surface de réflexion (12) est parabolique.

8. Tableau selon l'une des revendications 1 à 6, **caractérisé en ce que** chaque première surface de réflexion (12) est elliptique ou hyperbolique.

9. Tableau selon l'une des revendications 1 à 8, **caractérisé en ce que** la deuxième surface de réflexion (14) est parabolique.

10. Tableau selon l'une des revendications 1 à 8, **caractérisé en ce que** la deuxième surface de réflexion (14) est elliptique ou hyperbolique.

11. Tableau selon l'une des revendications précédentes **caractérisé en ce qu'**il comprend un film à luminosité améliorée (180).

12. Tableau selon l'une des revendications précédentes, **caractérisé en ce que** la surface à rétroéclairer (18) comprend un écran LCD.
